# EUROPEAN PATENT SPECIFICATION

(11) **EP 4 024 546 B1**
(45) Date of publication and mention of the grant of the patent: **29.01.2025**
(21) Application number: 20892270.8
(22) Date of filing: 10.07.2020
(51) Int. Cl.: H01M 10/04, H01M 50/466

(54) **ELECTRODE ASSEMBLY AND METHOD FOR MANUFACTURING SAME**
ELEKTRONISCHE ANORDNUNG UND VERFAHREN ZUR HERSTELLUNG DAVON
ENSEMBLE ÉLECTRODE ET SON PROCÉDÉ DE FABRICATION

(30) Priority: 26.11.2019 KR 20190153475
(43) Date of publication of application: 06.07.2022
(73) Proprietor: LG ENERGY SOLUTION, LTD., Seoul 07335 (KR)
(72) Inventor: KWAK, Jin Seop, Daejeon 34122 (KR)
(74) Representative: Plasseraud IP
(86) International application number: PCT/KR2020/009060
(87) International publication number: WO 2021/107314

(56) References cited:
- EP-B1- 1 177 591
- JP-A- 2002 331 309
- JP-A- 2013 073 913
- KR-A- 20120 055 656
- KR-A- 20130 095 371
- KR-B1- 100 925 857
- KR-B1- 101 650 860
- US-A1- 2009 186 270
- US-A1- 2012 156 538
- US-A1- 2015 147 626

## Description

### CROSS-REFERENCE TO RELATED APPLICATION

The present application claims the benefit of the priority of Korean Patent Application No. 10-2019-0153475, filed on November 26, 2019.

### TECHNICAL FIELD

The present invention relates to an electrode assembly and a method for manufacturing same, and more particularly, to: a method for manufacturing an electrode assembly, wherein, during the method, a fixing tape according to the related art is not used, and thus problems occurring upon attachment of the fixing tape may be resolved; and an electrode assembly which may be manufactured through the manufacturing method above.

### BACKGROUND ART

Batteries for storing electric energy are generally classified into a primary battery and a secondary battery. The primary battery is a disposable consumable battery, but on the other hand, the secondary battery is a rechargeable battery which is manufactured by using a material in which oxidation and reduction processes between electric current and substances are repeatable. That is, when the reduction reaction to the material is performed by the current, power is recharged. Also, when the oxidation reaction to the material is performed, the power is discharged. Such recharging and discharging may be performed repeatedly.

Among various types of secondary batteries, a lithium secondary battery is generally manufactured by mounting, to a case, an electrode assembly in which a positive electrode (cathode), a separator, and a negative electrode (an anode) are stacked. The recharging and discharging of the lithium secondary battery are performed while lithium ions are intercalated into the negative electrode from lithium metal oxide of the positive electrode and deintercalated therefrom repeatedly.

The electrode assembly is provided as one electrode assembly obtained by: stacking a fixed number of unit cells, each of which comprises a negative electrode, a separator, and a positive electrode stacked in a predetermined order; or stacking a positive electrode, a separator, and a negative electrode one by one repeatedly. Also, the electrode assembly is accommodated in a case such as a cylindrical can, a prismatic pouch, or the like, and finally, a secondary battery is manufactured.

Also, a winding method, a stacking method, a stacking and folding method, and the like are well-known as a method for manufacturing the electrode assembly. In the winding method, a separator is stacked between the negative electrode and the positive electrode and then rolled. In the stacking method, a negative electrode and a positive electrode are cut into desired width and length and then the negative electrode, a separator, and the positive electrode are repeatedly stacked. In the stack and folding method, unit cells are placed side by side on a folding separator and then folded from one side.

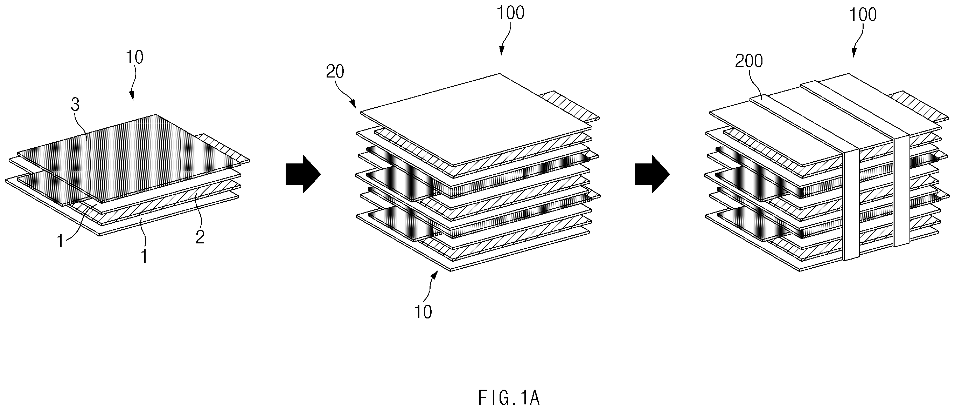

An electrode assembly through the stacking method of the above-described methods is manufactured in a manner as shown in FIG. 1A schematically illustrating a manufacturing process of the related art in which a predetermined number of positive electrodes 2, separators 1, and negative electrodes 3 are stacked on each other to manufacture a unit cell 10, and then, a predetermined number of unit cells 10 are stacked on each other to manufacture an electrode assembly 100. For reference, in the electrode assembly illustrated in FIG. 1A, a mono cell, in which a separator/a positive electrode/a separator/a negative electrode are stacked from the bottom, is manufactured as a unit cell 10, and a plurality of unit cells 10 are stacked on each other. Here, a half cell 20, in which a separator/an electrode (a negative electrode or a positive electrode)/a separator are stacked in the order, is placed on the uppermost layer so that the separator 1 is positioned on the uppermost layer.

Also, when a predetermined number of unit cells 10 are stacked, fixing tapes 200 for fixing the electrode assembly 100 are attached to wrap the circumference of the electrode assembly 100 (or to bind a side surface to a top surface and a bottom surface), thereby binding the unit cells 10.

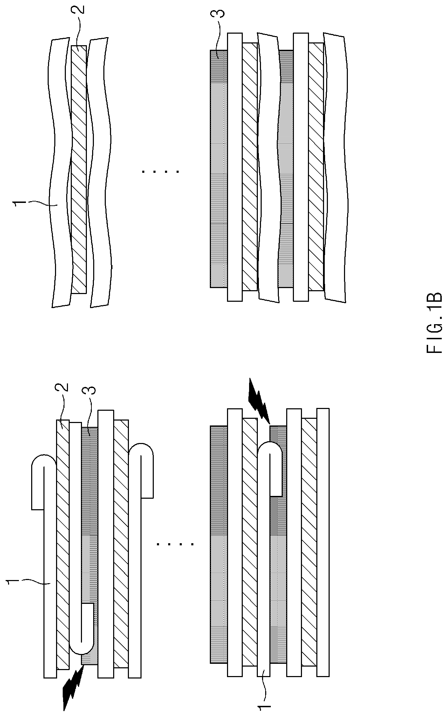

However, as shown in FIG. 1B illustrating a state in which folding and wrinkling of a separator occur in a structure of an electrode assembly according to the related art, a structure of making the binding through the fixing tape 200 described above may have a problem in which an end of the separator 1 is folded and wrinkled due to pressure applied when the fixing tape 200 is attached.

The folding and wrinkling of the separator 1 may cause the negative electrode 3 and the positive electrode 2 to come into contact with each other, which is likely to cause short circuit.
US 2015/147626 A1 discloses an electrode assembly comprising a thermally fusing film.

### DISCLOSURE OF THE INVENTION

### TECHNICAL PROBLEM

Thus, to solve the problems described above, a main object of the present invention is to provide an electrode assembly and a method for manufacturing same, wherein, a process of additionally attaching a fixing tape after stacking of electrode assemblies is completed may be removed.

### TECHNICAL SOLUTION

An electrode assembly according to the present invention in order to achieve the object described above is provided as defined in the appended set of claims, the present invention provides the electrode assembly in which a negative electrode, a separator, and a positive electrode are repeatedly stacked, the electrode assembly comprising a film disposed to cover one of side surfaces defined by stacking the negative electrode, the separator, and the positive electrode, wherein the film is thermally fused to the side surface defined by stacking the negative electrode, the separator, and the positive electrode. Here, two or more sheets of the separators are merged at an end and bonded to each other to form a bonding portion, and the film is thermally fused to the bonding portion.

The film is disposed on each of two facing side surfaces of the side surfaces defined by stacking the negative electrode, the separator, and the positive electrode.

The film is made of a thermoplastic material which is plastically deformed when subjected to heat and a pressure. More particularly, the film is made of a polyethylene terephthalate (PET) material.

In addition, the present invention further provides a manufacturing method by which the electrode assembly having the configuration described above may be manufactured. A manufacturing method according to the present invention is a method for manufacturing an electrode assembly in which a negative electrode, a separator, and a positive electrode are repeatedly stacked, the method comprising: a unit cell manufacturing step (S10) of manufacturing a unit cell having a predetermined stack structure of the negative electrode, the separator, and the positive electrode, wherein ends of the separators are bonded to each other to form a bonding portion; a film inserting step (S20) of inserting a film into a die; a unit cell stacking step (S30) of stacking the unit cell into the die; and a thermal fusing step (S40) of applying heat and a pressure to thermally fuse the film to the bonding portion of the stacked unit cell within the die.

In the film inserting step (S20), two films are inserted to come into contact with both side wall surfaces, respectively, which face each other within the die.

The unit cell stacking step (S30) and the thermal fusing step (S40) are repeatedly performed until stacking of predetermined unit cells is completed after the film inserting step (S20).

Alternatively, the unit cell stacking step (S30) may be repeated until stacking of predetermined unit cells is completed after the film inserting step (S20), and when the unit cell stacking step (S30) is complete, the thermal fusing step (S40) may be repeated to thermally fuse the film to each of the stacked unit cells.

In the unit cell manufacturing step (S10), a mono cell in which the separator/the negative electrode/the separator/the positive electrode are stacked sequentially from the bottom or a mono cell in which the separator/the positive electrode/the separator/the negative electrode are stacked sequentially from the bottom is manufactured as the unit cell. In addition, in the unit cell manufacturing step (S10), a half cell in which the separator/the negative electrode/the separator are stacked sequentially from the bottom or a half cell in which the separator/the positive electrode/the separator are stacked sequentially from the bottom is separately manufactured as the unit cell in addition to the mono cell.

Also, while the unit cell stacking step (S30) is repeatedly performed, the mono cells are stacked, wherein, when the unit cell stacking step (S30) is finally performed, the half cell is stacked.

The film is made of a thermoplastic material which is plastically deformed when subjected to heat and a pressure, and in the thermal fusing step (S40), the film is pressed and simultaneously heated by a tip of a soldering tool and thermally fused to the unit cell.

The die is configured to allow the tip of the soldering tool to enter the die or allow the soldering tool to be embedded in the die, and the thermal fusion of the film is performed within the die.

### ADVANTAGEOUS EFFECTS

In the present invention having the configuration described above, the film is thermally fused and fixed to the side surface of the electrode assembly instead of using the fixing tape (that is, subjected to lower pressure than pressure generated when the fixing tape is attached). Thus, the folding or wrinkling of the separator occurring in the structure of the related art may be prevent.

Particularly, in the present invention, two or more sheets of the separators are merged at the end to form the bonding portion, and the film is thermally fused to the bonding portion. Thus, the separator may be prevented from being folded or deformed during the thermal fusion. That is, when the thermal fusion is made, the ends of the separators are bonded to each other to restrict movements thereof, and in a region in which the bonding portion is formed, the thickness is increased. Thus, the area of thermal fusion to the film is enlarged, and fixing force may increase.

Also, in the present invention, the thermal fusion is performed right after the unit cell is stacked, and then, the next unit cell is stacked. Alternatively, in the present invention, the stacking of all the unit cells is complete, and then, the thermal fusion is performed. Thus, the manufacturing process may be flexible according to conditions of the electrode assembly.

Also, the thermal fusion is performed within the die by the soldering tool that enters the die in which the unit cell is stacked or the soldering tool that is embedded in the die. Thus, the unit cell is prevented from shaking during the thermal fusing process, and more stable thermal fusion may be achieved.

### BRIEF DESCRIPTION OF THE DRAWINGS

FIG. 1A is a view schematically illustrating a manufacturing process of an electrode assembly of the related art.
FIG. 1B is a view schematically illustrating a state in which a separator is folded and wrinkled in a structure of an electrode assembly of the related art.
FIG. 2 is a flow chart of a method for manufacturing an electrode assembly of the present invention.
FIG. 3 is a view illustrating a state in which, during a unit cell manufacturing step, a negative electrode, a separator, and a positive electrode are stacked on each other and manufactured as a unit cell.
FIG. 4A is a view showing: a cross-section (a) of a die in a method for manufacturing an electrode assembly of the present invention; and a state (b) in which a film is attached to the inside of the die.
FIG. 4B is a view additionally illustrating a state (c) in which a unit cell is placed between the films inside the die illustrated in FIG. 4A.
FIG. 4C is a view additionally illustrating states (c, d, and e) in which a film and a bonding portion of a unit cell are bonded to each other by a soldering tool within the die illustrated in FIG. 4B.
FIG. 5 is a view illustrating a plan view, a front view, and a left side view of an electrode assembly which is manufactured by a method for manufacturing an electrode assembly of the present invention.

### MODE FOR CARRYING OUT THE INVENTION

Hereinafter, the present invention will be described in detail with reference to the accompanying drawings so that the present invention can be easily carried out by a person skill in the art to which the present invention pertains. However, the present invention may be embodied in several different forms, and not be limited to the embodiments set forth herein.

A part unrelated to the description will be omitted so as to clearly describe the present invention, and the same reference symbols are affixed to identical or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to an electrode assembly in which a negative electrode 3, a separator 1, and a positive electrode 2 are repeatedly stacked on each other, and a method for manufacturing the electrode assembly. Hereinafter, embodiments of the present invention will be described in more detail with reference to the accompanying drawings.

### First embodiment

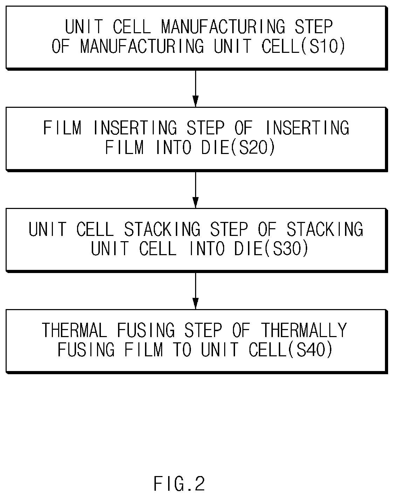

The present invention provides, as a first embodiment, a method for manufacturing an electrode assembly. As illustrated in FIG. 2 showing a sequence of a method for manufacturing an electrode assembly according to the present invention, a manufacturing method according to the embodiment comprises a unit cell manufacturing step (S10), a film inserting step (S20), a unit cell stacking step (S30), and a thermal fusing step (S40).

During the unit cell manufacturing step (S10), a unit cell 10 having a predetermined stack structure of a negative electrode 3, a separator 1, and a positive electrode 2 is manufactured, and ends of separators 1 are bonded to each other to form a bonding portion 1a.

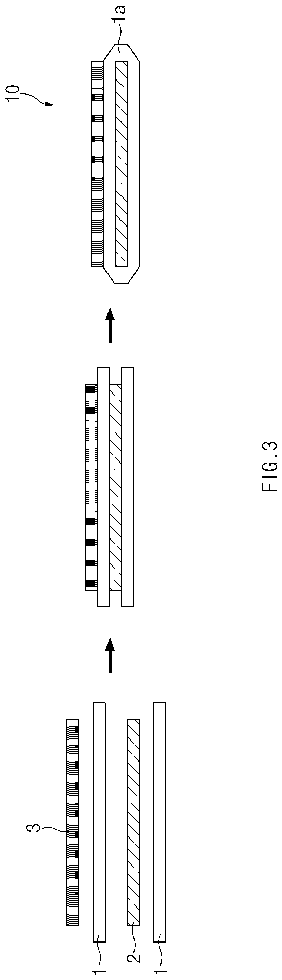

That is, as illustrated in FIG. 3 showing a state in which a negative electrode 3, a separator 1, a positive electrode 2 are stacked on each other and manufactured into a unit cell 10, a mono cell and a half cell, each of which has a predetermined stack structure, are manufactured as a unit cell. As illustrated in the drawing, the mono cell may have a structure in which the separator 1/the positive electrode 2/the separator 1/the negative electrode 3 are stacked sequentially from the bottom or a structure in which the separator 1/the negative electrode 3/the separator 1/the positive electrode 2 are stacked sequentially from the bottom. Also, a half cell is additionally provided, in which the uppermost electrode (a positive electrode or a negative electrode) is removed from the mono cell. In order for the separator 1 to be placed on the uppermost layer after the stacking of mono cells is complete, the half cell has a structure in which the separator 1/the negative electrode 3/the separator 1 are stacked sequentially from the bottom or a structure in which the separator 1/the positive electrode 2/the separator 1 are stacked sequentially from the bottom. Thus, the half cell is stacked after stacking of mono cells is complete, and thus, an electrode assembly stacked according to the present invention has a structure in which the separator is placed in each of the lowermost layer and the uppermost layer.

Here, in the unit cell 10 manufactured with the mono cell and the half cell, the separator 1 has an area larger than each of areas of the positive electrode 2 and the negative electrode 3, and has ends protruding to both sides, respectively, as illustrated in the drawing. During the unit cell manufacturing step (S10), upper and lower surfaces of the ends of the separators 1 are bonded to each other to form the bonding portion 1a. The bonding portion 1a is not necessarily formed at all of the protruding ends of the separators 1, but it is desirable to be formed at the ends that face the film 30 when the unit cells 10 are stacked.

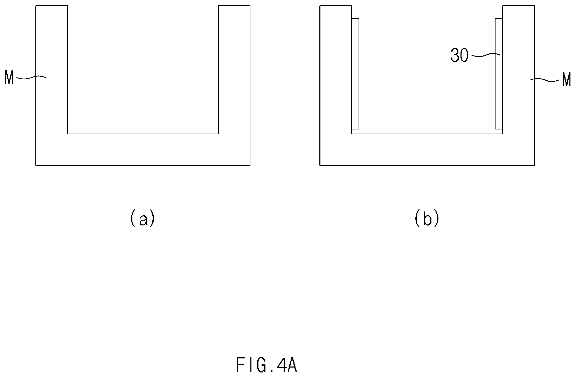

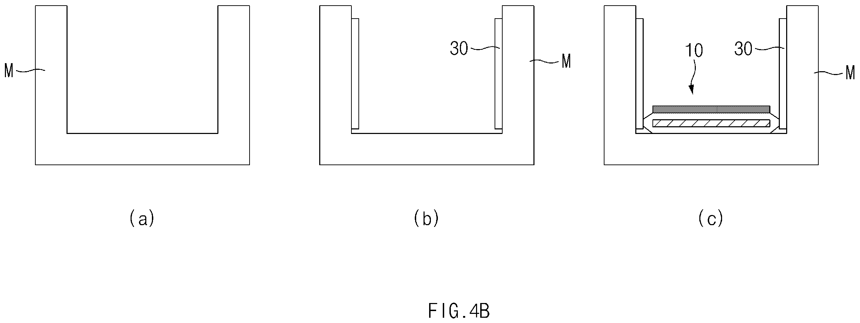

FIGS. 4A to 4C illustrate, in a method for manufacturing an electrode assembly of the invention: a cross-section (a) of a die M; a state (b) in which films 3 are attached inside the die M; a state (c) in which a unit cell 10 is placed between the films 30 inside the die M; and states (d and e) in which the films 30 and bonding portions 1a of unit cells 10 are bonded to each other by the soldering tool G within the die M.

Referring to FIGS. 4A to 4C, during the film inserting step (S20), the films 30 are disposed on the both inner circumferential surfaces facing each other inside the die M. The die M is manufactured to have a size enough to stack the unit cells 10 between the films 30 disposed therein and also manufactured to have sufficient strength. The die M may be configured such that the inner space thereof for stacking the unit cells 10 has a hexahedral shape, and one side surface or both side surfaces thereof on which the film 30 is not disposed may be provided in an open state so that an operation of an gripper (not shown) or the like for conveying and stacking the unit cell 10 when the unit cells 10 are stacked is not interfered.

Also, the film 30 inside the die M may be disposed in a temporarily fixed state on the inner circumferential surface of the die M so that vertically standing state thereof is maintained before thermal fusion is performed. That is, a clip, a holder, or the like for temporarily fixing the film may be installed in the die M. Alternatively, the film 30, having an adhesive with relatively weak adhesion applied on the surface thereof before disposed, may be disposed inside the die M. Such a means for temporarily fixing the film 30 may be embodied using other well-known methods as long as the film 30 may be easily separated from the inner circumferential surface of the die M after the manufacturing of the electrode assembly is completed.

Also, in order for the soldering tool G to enter when thermally fusing the film 30 and the unit cell 10, the die M may have a slit (not shown) or the like through which the soldering tool G may enter vertically or a structure in which the soldering tool G is mounted inside the die M in a slidable manner.

Next, the unit cell stacking step (S30) is performed, in a state in which the film 30 is disposed inside the die M, and the soldering tool G is ready to operate. During the unit cell stacking step (S30), the unit cells 10 are stacked at the right position between the two films 30 inside the die M. Here, each of the unit cells 10 is the mono cell as described above, and the stacking is performed such that the separator 1 is placed on a lower side.

Also, the thermal fusing step (S40) is performed, in which heat and a pressure are applied inside the die M to thermally fuse the film 30 to the bonding portion 1a of the stacked unit cell 10.

In the embodiment, the two films 30 are inserted to come into contact with both side wall surfaces, respectively, which face each other within the die M. Thus, the thermal fusion is simultaneously performed on the both side wall surfaces of the die M.

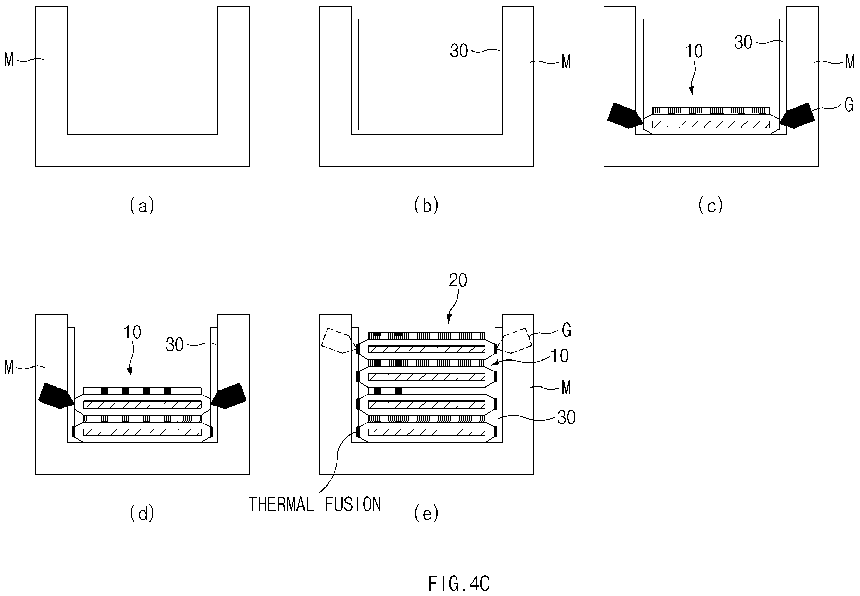

Also, FIG. 4C illustrates that the unit cell stacking step (S30) and the thermal fusing step (S40) are repeatedly performed until the stacking of predetermined unit cells 10 is completed after the film inserting step (S20). So, when one unit cell 10 is stacked, the unit cell 10 is thermally fused, and then, a next unit cell 10 is stacked and thermally fused.

However, there is no change in position of the unit cell 10 between the films 30 within the die M. Thus, the manufacturing process may be made in a manner in which, after all of the unit cells 10 are stacked without thermal fusion and in a state in which the stacking is complete, the thermal fusion of the unit cells 10 is performed sequentially from a unit cell 10 on the bottom layer (or from a unit cell from the top layer). That is, in the present invention, the order of the unit cell stacking step (S30) and the thermal fusing step (S40) may be changed flexibly.

Also, as described above, the mono cells are stacked while the unit cell stacking step (S30) is performed repeatedly, and when the unit cell stacking step (S30) is performed finally, the half cell is stacked. Thus, the electrode assembly manufactured by the above manner has a structure in which the separator 1 is disposed on each of the uppermost layer and the lowermost layer.

Here, the film 30 of the present invention is made of a thermoplastic material which is plastically deformed when subjected to heat and a pressure. For example, the film may be made of a polyethylene terephthalate (PET) material.

During the thermal fusing step (S40), the film 30 is pressed and simultaneously heated by a tip of the soldering tool G and thermally fused to the bonding portion 1a of the unit cell 10. Also, the temperature and pressure to be applied may be changed according to the thickness and material properties of the film 30 or the relative position and size of the bonding portion. Here, as described above, the die M is configured to allow the tip of the soldering tool G to enter the die or the soldering tool G to be embedded in the die, and the thermal fusion of the film 30 is performed within the die M.

### Second embodiment

The present invention provides, as a second embodiment, an electrode assembly which may be manufactured through the manufacturing method according to the first embodiment.

The electrode assembly provided in the embodiment is an electrode assembly in which a negative electrode 3, a separator 1, and a positive electrode 2 are repeatedly stacked, and the electrode assembly comprises a film 30 disposed to cover one of the side surfaces defined by stacking the negative electrode 3, the separator 1, and the positive electrode 2. The film 30 is thermally fused to the side surface defined by stacking the negative electrode 3, the separator 1, and the positive electrode 2.

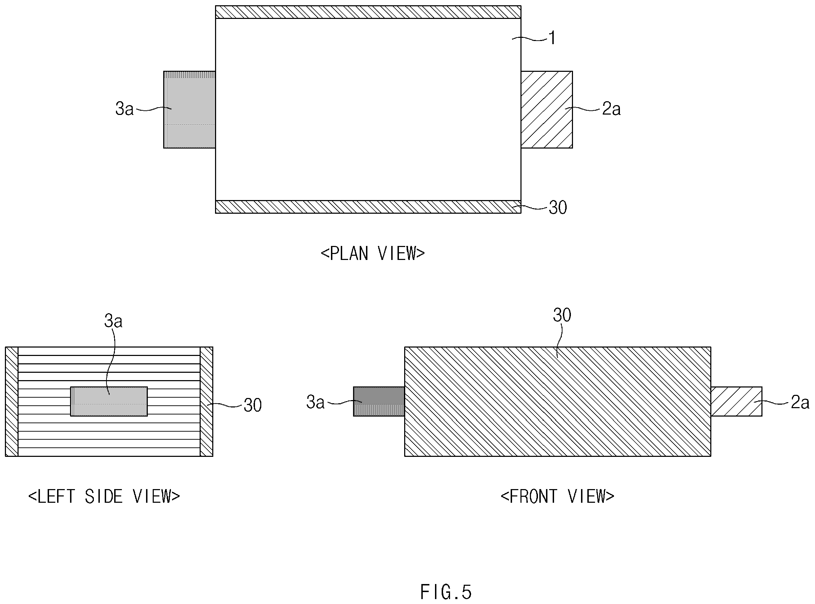

That is, referring to FIG. 5 illustrating a plan view, a front view, and a left side view of the electrode assembly which is manufactured by the method for manufacturing an electrode assembly of the present invention, the negative electrode 3 and the positive electrode 2 according to the present invention have a negative electrode tab 3a and a positive electrode tab 2a protruding to the sides, respectively. The positive electrode tab 2a and the negative electrode tab 3a are configured to protrude in directions opposite to each other, and the film 30 is attached to each of the side surfaces of the electrode assembly having two sides perpendicular to the sides from which the positive electrode tab 2a and the negative electrode tab 3a protrude.

In the present invention having the configuration described above, the film 30 is thermally fused and fixed to the side surface of the electrode assembly instead of using the fixing tape and is subjected to lower pressure than pressure generated when the fixing tape of the related art is attached. Thus, the folding or wrinkling of the separator 1 occurring in the structure of the related art may be prevent.

Particularly, in the present invention, two or more sheets of the separators 1 are merged at the end to form the bonding portion 1a, and the film 30 is thermally fused to the bonding portion 1a. Thus, the separator 1 may be prevented from being folded or deformed during the thermal fusion. That is, when the thermal fusion is made, ends of the separators 1 are bonded to each other to restrict movements thereof, and in a region in which the bonding portion 1a is formed, the thickness is increased. Thus, the area of thermal fusion to the film 30 is enlarged, and fixing force may increase.

Also, in the present invention, the thermal fusion is performed right after the unit cell 10 is stacked, and then, the next unit cell 10 is stacked. Alternatively, in the present invention, the stacking of all the unit cells 10 is complete, and then, the thermal fusion is performed. Thus, the manufacturing process may be flexible according to conditions of the electrode assembly.

Also, the thermal fusion is performed within the die M by the soldering tool G that enters the die M in which the unit cell 10 is stacked or the soldering tool G that is embedded in the die. Thus, the unit cell 10 is prevented from shaking during the thermal fusing process, and more stable thermal fusion may be achieved.

Although the present invention is described by specific embodiments and drawings, the present invention is not limited thereto, and various changes and modifications may be made by a person skilled in the art to which the present invention pertains within the technical idea of the present invention and scope of the appended claims.

## Claims

1. An electrode assembly comprising a plurality of unit cells (10) and films (30),
wherein each of the unit cells (10) has a structure in which a first separator, a positive electrode or a negative electrode, and a second separator are sequentially stacked, and
wherein each of the first separator and the second separator has an area larger than each of areas of the positive electrode (2) and the negative electrode (3),
wherein each of the first separator and the second separator has ends protruding both sides of the separator, and
bonding portions (1a) are formed by bonding the ends on each of the two sides of the first separator and the second separators of the unit cell,
the films (30) are disposed to cover the bonding portions (1a),
the films are disposed on each of the two sides of the directions perpendicular to the stacking direction of the electrodes and separators, and are attached to each of the side surfaces of the electrode assembly having two sides perpendicular to the sides from which the positive electrode tab (2a) and the negative electrode tab (3a) protrude, and
the films are thermally fused to the bonding portion (1a), and
the plurality of unit cells is stacked and thermally fused together at bonding portions (1a) on each of two sides of the first and the second separator of each unit cell.

2. The electrode assembly of claim 1, wherein each of the unit cells has a negative electrode on the second separator, when the positive electrode is stacked in the each of the unit cells, or
each of the unit cells has a positive electrode on the second separator, when the negative electrode is stacked in the each of the unit cells.

3. The electrode assembly of claim 1, wherein the film (30) is made of a thermoplastic material which is plastically deformed when subjected to heat and a pressure.

4. The electrode assembly of claim 3, wherein the film (30) is made of a polyethylene terephthalate (PET) material.

5. A method for manufacturing an electrode assembly according to claim 1, the method comprising:
a unit cell (10) manufacturing step (S10) of manufacturing a unit cell having a predetermined stack structure of a first separator, a positive electrode or a negative electrode, and a second separator,
wherein each of the first separator and the second separator has an area larger than each of areas of the positive electrode and the negative electrode so that ends of the first separator and the second separator (1) are bonded to each other to form a bonding portion (1a);
a film inserting step (S20) of inserting films (30) into a die (M) such that two films are inserted to come into contact with both side wall surfaces that have a direction perpendicular to the stacking direction of the unit cell to be stacked in the die (M), respectively, and such that the two films face each other within the die (M) ;
a unit cell stacking step (S30) of stacking the unit cell (10) into the die (M) such that the bonding portion (1a) is positioned to contact the films (30); and
a thermal fusing step (S40) of applying heat and a pressure to thermally fuse the film (30) to the bonding portion (1a) of the stacked unit cell (10) within the die (M).

6. The method of claim 5, wherein, in the unit cell (10) manufacturing step (S10), each of the unit cells has a negative electrode on the second separator, when the positive electrode is stacked in the each of the unit cells, or
each of the unit cells has a positive electrode on the second separator, when the negative electrode is stacked in the each of the unit cells.

7. The method of claim 5, wherein the unit cell stacking step (S30) and the thermal fusing step (S40) are repeatedly performed until stacking of predetermined unit cells (10) is completed after the film inserting step (S20).

8. The method of claim 5, wherein the unit cell stacking step (S30) is repeated until stacking of predetermined unit cells (10) is completed after the film inserting step (S20), and
when the unit cell stacking step (S30) is completed, the thermal fusing step (S40) is repeated to thermally fuse the film (30) to each of the stacked unit cells (10).

9. The method of claim 5, wherein, in the unit cell manufacturing step (S10),
a mono cell in which the first separator/the negative electrode/the second separator/the positive electrode are stacked sequentially from the bottom or a mono cell in which the first separator/the positive electrode/the second separator/the negative electrode are stacked sequentially from the bottom is manufactured as the unit cell,
a half cell in which the first separator/the negative electrode/the second separator are stacked sequentially from the bottom or a half cell in which the first separator/the positive electrode/the second separator are stacked sequentially from the bottom is separately manufactured as the unit cell in addition to the mono cell, and
while the unit cell stacking step (S30) is repeatedly performed, the mono cells are stacked,
wherein, when the unit cell stacking step (S30) is finally performed, the half cell is stacked.

10. The method of claim 5, wherein the film (30) is made of a thermoplastic material which is plastically deformed when subjected to heat and a pressure, and
in the thermal fusing step (S40), the film is pressed and simultaneously heated by a tip of a soldering tool and thermally fused to the unit cell (10).

11. The method of claim 10, wherein the die (M) is configured to allow the tip of the soldering tool to enter the die or allow the soldering tool to be embedded in the die, and
the thermal fusion of the film (30) is performed within the die (M).

## Patentansprüche

1. Elektrodenanordnung, umfassend eine Mehrzahl von Einheitszellen (10) und Folien (30),
wobei jede der Einheitszellen (10) eine Struktur aufweist, in welcher ein erster Separator, eine positive Elektrode oder eine negative Elektrode und ein zweiter Separator sequenziell gestapelt sind, und
wobei jeder aus dem ersten Separator und dem zweiten Separator eine Fläche aufweist, welche größer als jede der Flächen der positiven Elektrode (2) und der negativen Elektrode (3) ist,
wobei jeder aus dem ersten Separator und dem zweiten Separator Enden aufweist, welche an beiden Seiten des Separators hervorstehen, und
Verbindungsabschnitte (1a) durch Verbinden der Enden an jeder der zwei Seiten des ersten Separators und des zweiten Separators der Einheitszelle gebildet sind,
die Folien (30) angeordnet sind, um die Verbindungsabschnitte (1a) abzudecken,
die Folien an jeder der zwei Seiten der Richtungen angeordnet sind, welche senkrecht zu der Stapelrichtung der Elektroden und Separatoren sind, und an jeder der Seitenflächen der Elektrodenanordnung befestigt sind, welche zwei Seiten aufweist, welche senkrecht zu den Seiten sind, von welchen der positive Elektrodenstreifen (2a) und der negative Elektrodenstreifen (3a) hervorstehen, und
die Folien mit den Verbindungsabschnitten (1a) thermisch verschmolzen sind, und
die Mehrzahl von Einheitszellen gestapelt sind und an Verbindungsabschnitten (1a) an jeder der zwei Seiten des ersten und des zweiten Separators der Einheitszelle zusammen thermisch verschmolzen sind.

2. Elektrodenanordnung nach Anspruch 1, wobei jede der Einheitszellen eine negative Elektrode an dem zweiten Separator aufweist, wenn die positive Elektrode in jeder der Einheitszellen gestapelt ist, oder
jede der Einheitszellen eine positive Elektrode an dem zweiten Separator aufweist, wenn die negative Elektrode in jeder der Einheitszellen gestapelt ist.

3. Elektrodenanordnung nach Anspruch 1, wobei die Folie (30) aus einem thermoplastischen Material hergestellt ist, welches plastisch deformiert wird, wenn es Wärme und einem Druck ausgesetzt ist.

4. Elektrodenanordnung nach Anspruch 3, wobei die Folie (30) aus einem Polyethylenterephthalat-(PET)-Material hergestellt ist.

5. Verfahren zur Herstellung einer Elektrodenanordnung nach Anspruch 1, wobei das Verfahren umfasst:
einen Einheitszelle-(10)-Herstellungsschritt (S10) eines Herstellens einer Einheitszelle, welche eine vorbestimmte Stapelstruktur aus einem ersten Separator, einer positiven Elektrode oder einer negativen Elektrode und einem zweiten Separator aufweist,
wobei jeder aus dem ersten Separator und dem zweiten Separator eine Fläche aufweist, welche größer als jede der Flächen der positiven Elektrode und der negativen Elektrode ist, sodass Enden des ersten Separators und des zweiten Separators (1) miteinander verbunden sind, um einen Verbindungsabschnitt (1a) zu bilden;
einen Folien-Einführschritt (S20) eines Einführens von Folien (30) in eine Matrize (M), sodass zwei Folien derart eingeführt sind, dass sie mit beiden Seitenwandflächen in Kontakt treten, welche eine Richtung aufweisen, welche senkrecht zu der Stapelrichtung der Einheitszelle ist, um jeweils in der Matrize (M) gestapelt zu sein, und dass sich die zwei Folien in der Matrize (M) zugewandt sind;
einen Einheitszelle-Stapelschritt (S30) eines Stapelns der Einheitszelle (10) in die Matrize (M), sodass der Verbindungsabschnitt (1a) positioniert ist, um die Folien (30) zu kontaktieren; und
einen thermischen Verschmelzungsschritt (S40) eines Aufbringens von Wärme und eines Drucks, um die Folie (30) mit dem Verbindungsabschnitt (1a) der gestapelten Einheitszelle (10) in der Matrize (M) thermisch zu verschmelzen.

6. Verfahren nach Anspruch 5, wobei, in dem Einheitszelle-(10)-Herstellungsschritt (S10), jede der Einheitszellen eine negative Elektrode an dem zweiten Separator aufweist, wenn die positive Elektrode in jeder der Einheitszellen gestapelt ist, oder
Jede der Einheitszellen eine positive Elektrode an dem zweiten Separator aufweist, wenn die negative Elektrode in jeder der Einheitszellen gestapelt ist.

7. Verfahren nach Anspruch 5, wobei der Einheitszelle-Stapelschritt (S30) und der thermische Verschmelzungsschritt (S40) nach dem Folien-Einführschritt (S20) mehrmals durchgeführt werden, bis ein Stapeln vorbestimmter Einheitszellen (10) abgeschlossen ist.

8. Verfahren nach Anspruch 5, wobei der Einheitszelle-Stapelschritt (S30) nach dem Folien-Einführschritt (S20) wiederholt wird, bis ein Stapeln vorbestimmter Einheitszellen (10) abgeschlossen ist, und
wenn der Einheitszelle-Stapelschritt (S30) abgeschlossen ist, der thermische Verschmelzungsschritt (S40) wiederholt wird, um die Folie (30) mit jeder der gestapelten Einheitszellen (10) thermisch zu verschmelzen.

9. Verfahren nach Anspruch 5, wobei, in dem Einheitszelle-Herstellungsschritt (S10),
eine Monozelle, in welcher der erste Separator/die negative Elektrode/der zweite Separator/die positive Elektrode vom Boden sequenziell gestapelt sind, oder eine Monozelle, in welcher der erste Separator/die positive Elektrode/der zweite Separator/die negative Elektrode vom Boden sequenziell gestapelt sind, als die Einheitszelle hergestellt wird,
eine Halbzelle, in welcher der erste Separator/die negative Elektrode/der zweite Separator vom Boden sequenziell gestapelt sind, oder eine Halbzelle, in welcher der erste Separator/die positive Elektrode/der zweite Separator vom Boden sequenziell gestapelt sind, zusätzlich zu der Monozelle separat als die Einheitszelle hergestellt wird, und
während der Einheitszelle-Stapelschritt (S30) mehrmals durchgeführt wird, die Halbzellen gestapelt werden,
wobei, wenn der Einheitszelle-Stapelschritt (S30) abschließend durchgeführt wird, die Halbzelle gestapelt wird.

10. Verfahren nach Anspruch 5, wobei die Folie (30) aus einem thermoplastischen Material hergestellt wird, welches plastisch deformiert wird, wenn es Wärme und einem Druck ausgesetzt ist, und
in dem thermischen Verschmelzungsschritt (S40), die Folie durch eine Spitze eines Lötwerkzeugs gleichzeitig gepresst und erwärmt wird und mit der Einheitszelle (10) thermisch verschmolzen wird.

11. Verfahren nach Anspruch 10, wobei die Matrize (M) dazu eingerichtet ist, es der Spitze des Lötwerkzeugs zu ermöglichen, in die Matrize einzudringen, oder es dem Lötwerkzeug zu ermöglichen, in der Matrize eingebettet zu sein, und
das thermische Verschmelzen der Folie (30) in der Matrize (M) durchgeführt wird.

## Revendications

1. Ensemble électrode comprenant une pluralité de cellules unitaires (10) et des films (30),
dans lequel chacune des cellules unitaires (10) présente une structure dans laquelle un premier séparateur, une électrode positive ou une électrode négative, et un deuxième séparateur sont empilés séquentiellement, et
dans lequel chacun du premier séparateur et du deuxième séparateur présente une surface plus grande que chacune des surfaces de l'électrode positive (2) et de l'électrode négative (3),
dans lequel chacun du premier séparateur et du deuxième séparateur présente des extrémités faisant saillie des deux côtés du séparateur, et
des parties de liaison (1a) sont formées par liaison des extrémités sur chacun des deux côtés du premier séparateur et des deuxièmes séparateurs de la cellule unitaire, les films (30) sont disposés de façon à recouvrir les parties de liaison (1a),
les films sont disposés sur chacun des deux côtés des directions perpendiculaires à la direction d'empilement des électrodes et des séparateurs, et sont fixés à chacune des surfaces latérales de l'ensemble électrode présentant deux côtés perpendiculaires aux côtés à partir desquels la patte d'électrode positive (2a) et la patte d'électrode négative (3a) font saillie, et
les films sont thermosoudés à la partie de liaison (1a), et
la pluralité de cellules unitaires sont empilées et thermosoudées ensemble au niveau de parties de liaison (1a) sur chacun des deux côtés du premier et du deuxième séparateur de chaque cellule unitaire.

2. Ensemble électrode selon la revendication 1, dans lequel chacune des cellules unitaires présente une électrode négative sur le deuxième séparateur, lorsque l'électrode positive est empilée sur chacune des cellules unitaires, ou
chacune des cellules unitaires présente une électrode positive sur le deuxième séparateur, lorsque l'électrode négative est empilée sur chacune des cellules unitaires.

3. Ensemble électrode selon la revendication 1, dans lequel le film (30) est constitué d'un matériau thermoplastique qui est déformé plastiquement lorsqu'il est soumis à de la chaleur et à une pression.

4. Ensemble électrode selon la revendication 3, dans lequel le film (30) est constitué d'un matériau en polyéthylène téréphtalate (PET).

5. Procédé de fabrication d'un ensemble électrode selon la revendication 1, le procédé comprenant :
une étape de fabrication de cellule unitaire (10) (S10) consistant à fabriquer une cellule unitaire présentant une structure d'empilement prédéterminée constituée d'un premier séparateur, d'une électrode positive ou d'une électrode négative et d'un deuxième séparateur,
dans lequel chacun du premier séparateur et du deuxième séparateur présente une surface plus grande que chacune des surfaces de l'électrode positive et de l'électrode négative de telle sorte que des extrémités du premier séparateur et du deuxième séparateur (1) sont liées l'une à l'autre pour former une partie de liaison (1a) ;
une étape d'insertion de films (S20) consistant à insérer des films (30) dans une matrice (M) de telle sorte que deux films sont insérés de façon à venir en contact avec les deux surfaces de paroi latérales qui présentent une direction perpendiculaire à la direction d'empilement de la cellule unitaire destinée à être empilée dans la matrice (M), respectivement, et de telle sorte que les deux films se font face à l'intérieur de la matrice (M) ;
une étape d'empilement de cellule unitaire (S30) consistant à empiler la cellule unitaire (10) dans la matrice (M) de telle sorte que la partie de liaison (1a) est positionnée de façon à entrer en contact avec les films (30) ; et
une étape de thermosoudage (S40) consistant à appliquer de la chaleur et une pression pour thermosouder le film (30) à la partie de liaison (1a) de la cellule unitaire empilée (10) à l'intérieur de la matrice (M).

6. Procédé selon la revendication 5, dans lequel, dans l'étape de fabrication de cellule unitaire (10) (S10), chacune des cellules unitaires présente une électrode négative sur le deuxième séparateur, lorsque l'électrode positive est empilée sur chacune des cellules unitaires, ou
chacune des cellules unitaires présente une électrode positive sur le deuxième séparateur, lorsque l'électrode négative est empilée sur chacune des cellules unitaires.

7. Procédé selon la revendication 5, dans lequel l'étape d'empilement de cellule unitaire (S30) et l'étape de thermosoudage (S40) sont réalisées de manière répétée jusqu'à ce que l'empilement de cellules unitaires (10) prédéterminées soit achevé après l'étape d'insertion de films (S20).

8. Procédé selon la revendication 5, dans lequel l'étape d'empilement de cellule unitaire (S30) est répétée jusqu'à ce que l'empilement de cellules unitaires (10) prédéterminées soit achevé après l'étape d'insertion de films (S20), et
lorsque l'étape d'empilement de cellule unitaire (S30) est achevée, l'étape de thermosoudage (S40) est répétée pour thermosouder le film (30) à chacune des cellules unitaires (10).

9. Procédé selon la revendication 5, dans lequel, dans l'étape de fabrication de cellule unitaire (S10),
une monocellule dans laquelle le premier séparateur / l'électrode négative / le deuxième séparateur / l'électrode positive sont empilés séquentiellement à partir du bas ou une monocellule dans laquelle le premier séparateur / l'électrode positive / le deuxième séparateur / l'électrode négative sont empilés séquentiellement à partir du bas est fabriquée en tant que cellule unitaire,
une demi-cellule dans laquelle le premier séparateur / l'électrode négative / le deuxième séparateur sont empilés séquentiellement à partir du bas ou une demi-cellule dans laquelle le premier séparateur / l'électrode positive / le deuxième séparateur sont empilés séquentiellement à partir du bas est fabriquée séparément en tant que cellule unitaire en plus de la monocellule, et
pendant que l'étape d'empilement de cellule unitaire (S30) est réalisée de manière répétée, les monocellules sont empilées,
dans lequel, lorsque l'étape d'empilement de cellule unitaire (S30) est enfin réalisée, la demi-cellule est empilée.

10. Procédé selon la revendication 5, dans lequel le film (30) est constitué d'un matériau thermoplastique qui est déformé plastiquement lorsqu'il est soumis à de la chaleur et à une pression, et
dans l'étape de thermosoudage (S40), le film est pressé et simultanément chauffé par une panne d'un fer à souder et thermosoudé à la cellule unitaire (10).

11. Procédé selon la revendication 10, dans lequel la matrice (M) est configurée pour permettre à la panne du fer à souder d'entrer dans la matrice ou pour permettre au fer à souder d'être intégré dans la matrice, et
le thermosoudage du film (30) est réalisé à l'intérieur de la matrice (M).
